# DEMANDE DE BREVET EUROPEEN

(11) **EP 2 426 310 A1**
(43) Date de publication de la demande: **07.03.2012**
(21) Numéro de dépôt: 11179565.4
(22) Date de dépôt: 31.08.2011
(51) Int. Cl.: E06B 9/76, F16B 7/04

(54) **Manivelle de volet roulant**

(30) Priorité: 03.09.2010 FR 1056996
(71) Demandeur: Zurfluh Feller, 25150 Autechaux Roide (FR)
(72) Inventeur: Gouthiere, Damien, 70400 BUSSUREL (FR)
(74) Mandataire: Michardière, Bernard

(57) **Abrégé**

Manivelle de volet roulant comprenant une tringle (1) comportant une première extrémité liée en rotation à une sortie de caisson de volet roulant et une seconde extrémité prolongée par un premier tenon (3) ; un bras de manivelle (2) comprenant une première extrémité montée pivotante par rapport au premier tenon (3) ; une poignée (P) comportant un second tenon (5) monté pivotant par rapport à une seconde extrémité du bras de manivelle (2) ; au moins un des premier et second tenons (3, 5) est amovible par rapport à la tringle (1) ou à la poignée (P), et le tenon (3, 5) présente deux faces principales parallèles (F) séparées par une épaisseur constante.

## Description

La présente invention est relative à une manivelle de volet roulant comprenant :
- une tringle comportant une première extrémité liée en rotation à une sortie du caisson de volet roulant et une seconde extrémité prolongée par un premier tenon,
- un bras de manivelle comprenant une première extrémité montée pivotante par rapport au premier tenon,
- une poignée comportant un second tenon monté pivotant par rapport à une seconde extrémité du bras de manivelle.

Dans le cadre de la réalisation des manivelles de volet roulant, les articulations étaient généralement réalisées jusqu'à présent en utilisant des pièces métalliques moulées, décolletées ou forgées.

Cette manière de procéder génère des coûts importants qui pèsent de plus en plus sur la compétitivité des produits.

Le document FR 2 770 577 décrit une manivelle de volet roulant qui demeure en position quelle que soit la configuration donnée par l'utilisateur.

Le dispositif décrit comporte de nombreuses pièces, chacune des pièces nécessitant une étude et des moyens de production. Les manivelles de volet roulant sont par ailleurs soumises à des contraintes mécaniques importantes et à une utilisation régulière soutenue.

Ces contraintes particulières n'ont pas permis jusqu'à présent l'utilisation et le développement de solutions alternatives.

L'invention a pour but, surtout de limiter les coûts de production d'une manivelle de volet roulant tout en maintenant une résistance mécanique élevée.

Selon l'invention, une manivelle de volet roulant comprenant :
- une tringle comportant une première extrémité liée en rotation à une sortie de caisson de volet roulant et une seconde extrémité prolongée par un premier tenon,
- un bras de manivelle comprenant une première extrémité montée pivotante par rapport au premier tenon,
- une poignée comportant un second tenon monté pivotant par rapport à une seconde extrémité du bras de manivelle, est caractérisée en ce que au moins un des premier et second tenons est amovible par rapport à la tringle ou à la poignée, et en ce que le tenon présente deux faces principales parallèles séparées par une épaisseur constante.

Avantageusement au moins l'un des premier et second tenons est réalisé par découpage d'une tôle, en particulier d'acier.

De préférence, le premier tenon et le second tenon sont identiques.

La section du bras de manivelle peut être identique à la section de la tringle, de sorte que le bras et la tringle sont obtenus à partir d'un même profilé.

Au moins l'un des premier et second tenons peut être partiellement recouvert d'une coiffe, en particulier en matière plastique.

La coiffe peut comporter une portée cylindrique formant un palier pour la rotation d'une poignée. Une coiffe est avantageusement prévue pour chaque tenon, et les deux coiffes peuvent être identiques.

Une poignée est avantageusement prévue pour assurer la préhension, et les deux poignées peuvent être identiques.

Le bras de manivelle peut comporter un orifice longitudinal logeant deux poussoirs montés de chaque côté d'un ressort.

Avantageusement, la section de l'orifice du bras de manivelle est identique à la section de l'orifice de la tringle.

Au moins un tenon peut comporter des moyens de liaison avec au moins un clip coopérant avec la tringle pour assurer la fixation du tenon dans la tringle.

Le clip peut comporter un doigt apte à s'engager dans un orifice appartenant à la tringle.

Le clip peut comporter au moins un appendice traversant un orifice du tenon.

Deux clips peuvent être fixés en vis-à-vis de part et d'autre du tenon.

Avantageusement, la tringle et le bras de manivelle sont réalisés à l'aide d'un même profilé qui comporte un évidement de section sensiblement cruciforme, et dans lequel vient coulisser le premier tenon, l'intérieur de cet évidement définissant d'une part au moins une zone sensiblement rectangulaire apte à recevoir le tenon afin de permettre la transmission du couple de rotation lorsque le profilé est utilisé pour réaliser la tringle, et d'autre part, des secteurs d'arc cylindriques afin de guider le ressort et les poussoirs lorsque le profilé est utilisé pour réaliser le bras.

D'autres caractéristiques et avantages de l'invention apparaîtront dans la description qui suit d'un mode de réalisation préféré avec référence aux dessins annexés mais qui n'a aucun caractère limitatif. Sur ces dessins :
Fig. 1 est une vue en perspective éclatée d'une manivelle selon l'invention.
Fig.2 est une section de la tringle, à plus grande échelle, suivant la ligne II de Fig.1.
Fig. 3 est une vue en perspective de la manivelle de Fig. 1 montée.
Fig. 4 est une vue similaire à Fig. 3, la manivelle étant partiellement démontée.
Fig. 5 est une vue similaire à Fig. 4, à un stade de démontage plus avancé.
Fig. 6 est un détail d'un tenon utilisé dans la manivelle selon l'invention.
Fig. 7 est une vue en coupe, à plus grande échelle, de la fixation du tenon de Fig. 6.
Fig. 8 est une vue en coupe, à plus grande échelle, de la liaison entre la tringle et un bras selon l'invention.
Fig. 9 est une vue en coupe, à plus grande échelle, du bouchon et de la poignée inférieure, et
Fig. 10 est une section, à plus grande échelle, d'un bras selon l'invention.

Dans toute la description qui suit d'un mode de réalisation d'un dispositif selon l'invention, les termes relatifs tels que « supérieur », « inférieur », « avant », « arrière », « horizontal » et « vertical » sont à interpréter lorsque le dispositif selon l'invention est installé sur un coffre de volet roulant, en situation de fonctionnement.

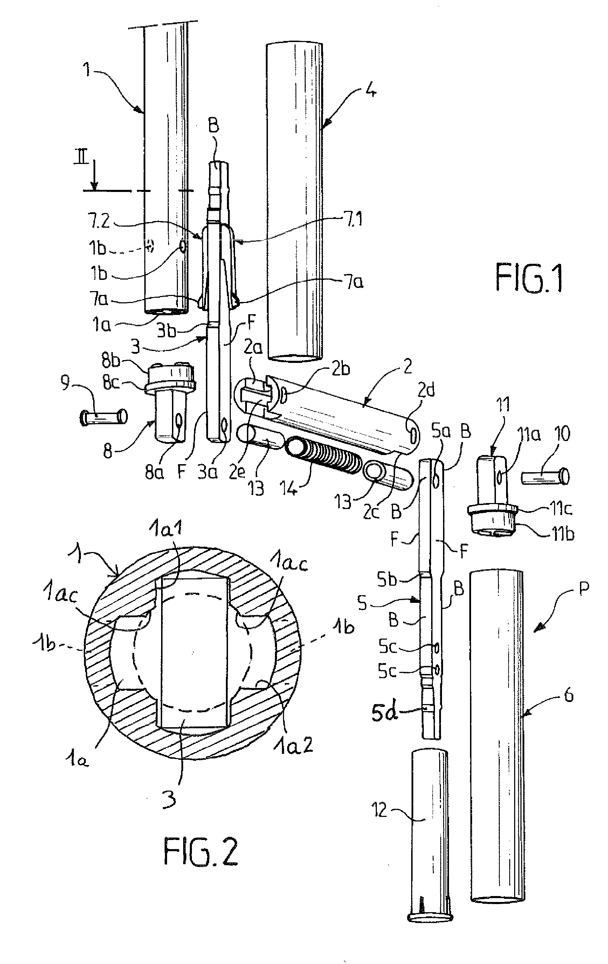

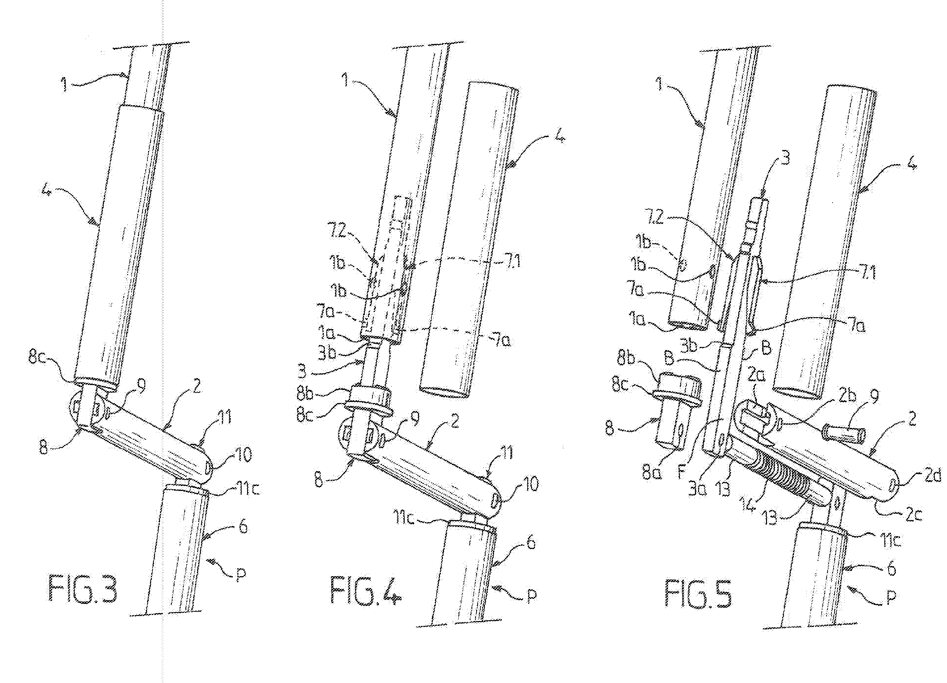

On peut voir Fig. 1 à 5 un mode de réalisation d'une manivelle selon l'invention.

La structure générale de la manivelle selon l'invention est la suivante.

La partie inférieure d'une tringle 1 est articulée à un bras de manivelle 2 par l'intermédiaire d'un premier tenon 3. Une poignée supérieure 4 tubulaire est montée rotative autour de la partie inférieure de la tringle 1. Le bras de manivelle 2 est par ailleurs également articulé à un deuxième tenon 5. Une poignée inférieure 6 tubulaire est montée rotative autour du deuxième tenon 5 identique à la poignée 4.

La structure de la manivelle de volet roulant va maintenant être décrite plus précisément.

La tringle 1 se présente sous la forme d'un tube cylindrique comportant une extrémité supérieure ou première extrémité liée en rotation à une sortie de caisson de volet roulant, non représentée, par l'intermédiaire d'un cardan ou genouillère. La tringle 1 comporte une deuxième extrémité ou extrémité inférieure représentée sur la figure 1.

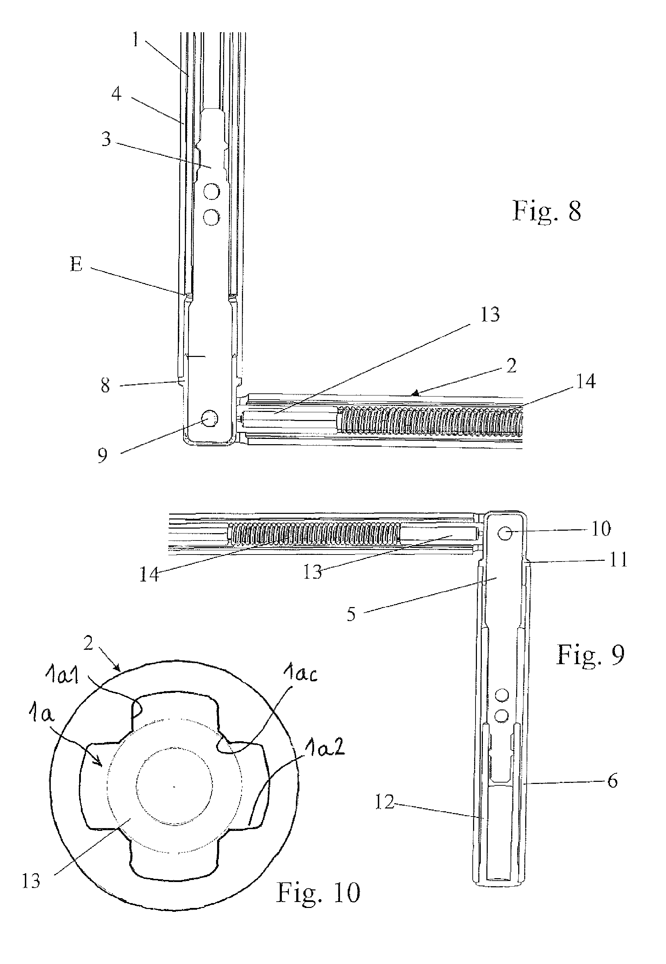

La tringle 1 est réalisée à l'aide d'un profilé à contour extérieur cylindrique qui comporte un évidement 1a, dont la section sensiblement cruciforme est visible Fig. 2, et dans lequel vient coulisser le premier tenon 3. D'une part, cet évidement 1a définit au moins une zone sensiblement rectangulaire 1a1 apte à recevoir le tenon 3 afin de permettre la transmission du couple de rotation. D'autre part, l'intérieur de l'évidement 1a définit des secteurs d'arc cylindriques 1ac afin de guider le ressort 14 et les poussoirs 13 quand ce profilé est utilisé pour réaliser le bras 2 (Fig. 10). Les secteurs 1ac sont avantageusement situés aux quatre angles d'intersection de deux zones rectangulaires creuses 1a1, 1a2 à angle droit de l'évidement 1a.

Le premier tenon 3 est équipé de clips 7.1 et 7.2 comportant des doigts 7a aptes à s'engager dans des orifices 1 b prévus dans la tringle 1 de manière à assurer l'arrêt en translation du premier tenon 3 par rapport à la tringle 1. Le premier tenon 3 présente une forme parallélépipédique sensiblement allongée de section rectangulaire.

L'extrémité inférieure du premier tenon 3 comporte un orifice cylindrique 3a. Un épaulement 3b est prévu de chaque côté du tenon 3 de manière à venir en butée sur la tringle 1 lors de son insertion dans l'orifice 1a.

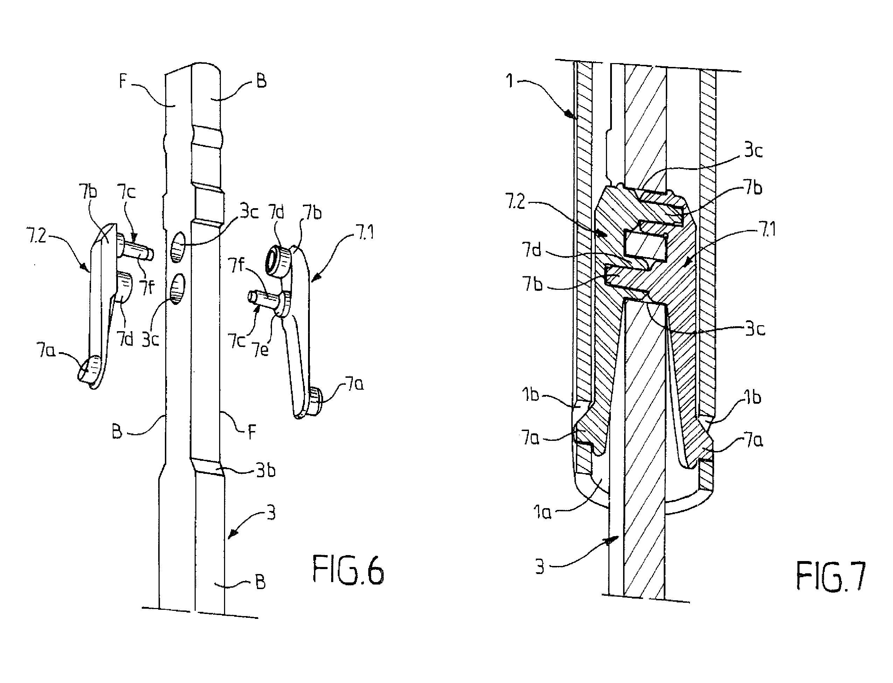

La liaison entre le premier tenon 3 et la tringle 1 est plus particulièrement visible Fig. 6 et 7.

Le premier tenon 3 comporte deux orifices traversant cylindriques et contigus 3c. Les orifices 3c permettent l'insertion et la fixation des deux clips 7.1 et 7.2 disposés en vis-à-vis. Chaque clip 7.1, 7.2 comporte un corps 7b à partir duquel s'étendent un premier appendice mâle 7c et un second appendice femelle 7d.

Chaque appendice mâle 7c comporte un épaulement 7e à partir duquel se projette une partie cylindrique 7f. Chaque appendice femelle 7d se présente sous la forme d'une partie tubulaire présentant un logement interne cylindrique de diamètre sensiblement égal au diamètre de la partie cylindrique 7f.

Les clips 7.1, 7.2 sont appariés de telle sorte qu'au montage chaque appendice mâle 7c soit en vis-à-vis d'un appendice femelle 7d. Les appendices 7c, 7d des clips 7.1, 7.2 sont ainsi complémentaires et enfoncés à force l'un dans l'autre de part et d'autre du tenon 3 à travers les orifices 3c. Les corps 7b se prolongent par une partie flexible terminée par le doigt 7a.

La poignée supérieure 4 est montée librement rotative autour de l'extrémité inférieure de la tringle 1.

Elle est immobilisée en translation axiale à l'aide d'un épaulement intérieur E (Fig. 8) qui vient se loger sous la tringle de manivelle 1.

Une coiffe 8 réalisée en matière plastique, de préférence à faible coefficient de frottement favorable au glissement, couvre l'extrémité inférieure du premier tenon 3 et s'engage à l'intérieur de l'extrémité inférieure de la tringle 1. Un orifice 8a est prévu dans la coiffe 8 coïncidant avec l'orifice 3a lorsque la coiffe 8 est insérée sur le premier tenon 3. La coiffe 8 comprend une portée cylindrique 8b qui assure la fonction de palier pour guider la rotation de la poignée supérieure 4. La coiffe 8 comprend également un épaulement 8c d'un diamètre extérieur supérieur au diamètre intérieur de la poignée supérieure 4 de manière à assurer l'arrêt en translation de la poignée 4.

Le bras de manivelle 2 comporte une première extrémité présentant une rainure traversante 2a d'une largeur sensiblement égale à l'épaisseur du tenon 3 et de la coiffe 8.

Un orifice traversant 2b d'axe sensiblement orthogonal à la rainure 2a permet le montage d'un rivet 9 traversant l'orifice 2b du bras de manivelle 2, l'orifice 8a de la coiffe 8 et l'orifice 3a du premier tenon 3 pour assurer l'articulation du bras de manivelle 2 par rapport au premier tenon 3.

La coiffe 8 du tenon 3 assure la protection à l'usure de l'articulation tout en assurant la fonction palier de la poignée.

Le bras de manivelle 2 présente une structure symétrique. Il comporte une seconde extrémité présentant une seconde rainure 2c et un second orifice 2d permettant l'articulation du bras de manivelle 2 avec le deuxième tenon 5 de façon similaire à l'articulation entre le premier tenon 3 et le bras de manivelle 2 en utilisant un second rivet 10 et une seconde coiffe 11 identique à la coiffe 8.

Le deuxième tenon 5 est identique au premier tenon 3. Il comporte un orifice 5a permettant son articulation avec le bras de manivelle 2 et un épaulement 5b prévu pour arrêter en translation le bouchon 12 ainsi que deux orifices 5c. La partie supérieure du deuxième tenon 5 est couverte de la coiffe 11 tandis que la partie inférieure du deuxième tenon 5 est enfoncée à force dans un évidement prévu dans un bouchon 12. Le deuxième tenon 5 comporte avantageusement, sur sa tranche, des crans 5d de blocage dans le bouchon 12 (Fig.9). Des crans similaires sont prévus sur le tenon 3 identique.

Un orifice 11a est prévu dans la coiffe 11 coïncidant avec l'orifice 5a lorsque la coiffe 11 est engagée sur le deuxième tenon 5. La coiffe 11 comprend une portée cylindrique 11 b apte à servir de palier pour la rotation de la poignée tubulaire 6 en s'engageant à l'intérieur de cette poignée. La coiffe 11 comporte aussi un épaulement 11c d'un diamètre extérieur supérieur au diamètre intérieur de la poignée inférieure 6 de manière à assurer l'arrêt en translation de la poignée 6.

La poignée inférieure 6 est montée pivotante autour du deuxième tenon 5 et du bouchon 12. Le bouchon 12 comporte un épaulement arrêtant la poignée 6 en translation.

Le tenon 5, la coiffe 11, le rivet 10 et la poignée inférieure 6 forment la poignée P.

Le bras de manivelle 2 comporte un orifice longitudinal 2e de section identique à l'orifice 1a de la tringle 1. L'orifice 2e est une réservation cylindrique qui fait office de logement et de guidage pour deux poussoirs 13 montés de chaque côté d'un ressort 14 d'indexage de la manivelle en position pliée ou dépliée. Les poussoirs 13 exercent un effort continu sur les faces latérales du premier tenon 3 et du deuxième tenon 5.

La tringle 1 et le bras 2 ont la même section et peuvent être obtenus à partir d'un même profilé, par découpage à la longueur appropriée. Le bras 2 est ensuite usiné pour l'obtention des rainures 2a et 2c.

Le profilé pour la tringle 1 et le bras 2 permet, à la fois, d'assurer la transmission du couple par le tenon 3 grâce au logement 1a1 dans le cas de son utilisation en tringle 1, et de guider le ressort 14 et les poussoirs 13 grâce aux arcs de cercle 1ac dans le cas de son utilisation en bras 2 de manivelle.

Les tenons 3 et 5 présentent deux faces principales parallèles F séparées par une épaisseur constante. Seule la largeur entre les bords B varie. Les tenons 3 et 5 peuvent être réalisés par découpage à partir d'une tôle, en particulier d'acier. Les tenons 3 et 5 étant identiques, leur coût de fabrication s'en trouve réduit.

## Revendications

1. Manivelle de volet roulant comprenant :
- une tringle (1) comportant une première extrémité liée en rotation à une sortie de caisson de volet roulant et une seconde extrémité prolongée par un premier tenon (3),
- un bras de manivelle (2) comprenant une première extrémité montée pivotante par rapport au premier tenon (3),
- une poignée (P) comportant un second tenon (5) monté pivotant par
rapport à une seconde extrémité du bras de manivelle (2),
**caractérisée en ce que** au moins l'un des premier et second tenons (3, 5) est amovible par rapport à la tringle (1) ou à la poignée (P), et **en ce que** le tenon (3, 5) présente deux faces principales parallèles (F) séparées par une épaisseur constante.

2. Manivelle selon la revendication 1, **caractérisée en ce que** au moins l'un des premier et second tenons (3, 5) est réalisé par découpage d'une tôle, en particulier d'acier.

3. Manivelle selon la revendication 1 ou 2, **caractérisée en ce que** le premier tenon (3) et le second tenon (5) sont identiques.

4. Manivelle selon l'une quelconque des revendications précédentes, **caractérisée en ce que** la section du bras de manivelle (2) est identique à la section de la tringle (1).

5. Manivelle selon l'une quelconque des revendications précédentes, **caractérisée en ce que** au moins l'un des premier et second tenons (3, 5) est partiellement recouvert d'une coiffe (8, 11), en particulier en matière plastique.

6. Manivelle selon la revendication 5, **caractérisée en ce que** la coiffe (8, 11) forme un palier (8b, 11b) guidant une poignée (4, 6).

7. Manivelle selon la revendication 5 ou 6, **caractérisée en ce que** les deux coiffes (8 et 11) sont identiques.

8. Manivelle selon la revendication 5 ou 6, **caractérisée en ce que** les deux poignées (4 et 6) sont identiques

9. Manivelle selon l'une quelconque des revendications précédentes **caractérisée en ce que** le bras de manivelle (2) comporte un orifice longitudinal (2e) logeant deux poussoirs (13) montés de chaque côté d'un ressort (14).

10. Manivelle selon l'une quelconque des revendications précédentes **caractérisée en ce que** au moins un tenon (3, 5) comporte des moyens de liaison avec au moins un clip (7.1, 7.2) coopérant avec la tringle (1) pour assurer la fixation du tenon (3, 5) dans la tringle (1).

11. Manivelle selon la revendication 10, **caractérisée en ce que** le clip (7.1, 7.2) comporte un doigt (7a) apte à s'engager dans un orifice (1 b) appartenant à la tringle (1).

12. Manivelle selon la revendication 10 ou 11, **caractérisée en ce que** le clip (7.1, 7.2) comporte au moins un appendice (7c, 7d) traversant un orifice (3c, 5c) du tenon (3, 5).

13. Manivelle selon la revendication 12, **caractérisée en ce que** deux clips (7.1) et (7.2) sont fixés en vis-à-vis de part et d'autre du tenon (3, 5).

14. Manivelle selon l'ensemble des revendications 1 et 9, **caractérisée en ce que** la tringle (1) et le bras (2) de manivelle sont réalisés à l'aide d'un même profilé qui comporte un évidement (1a) de section sensiblement cruciforme, et dans lequel vient coulisser le premier tenon (3), l'intérieur de cet évidement (1a) définissant d'une part au moins une zone sensiblement rectangulaire (1a1) apte à recevoir le tenon (3) afin de permettre la transmission du couple de rotation lorsque le profilé est utilisé pour réaliser la tringle (1), et d'autre part, des secteurs d'arc cylindriques (1ac) afin de guider le ressort (14) et les poussoirs (13) lorsque le profilé est utilisé pour réaliser le bras (2).
